(19) Europäisches Patentamt

European Patent Office

Office européen des brevets

(11) **EP 1 323 197 B1**

(12) **EUROPÄISCHE PATENTSCHRIFT**

(45) Veröffentlichungstag und Bekanntmachung des Hinweises auf die Patenterteilung:
**15.12.2004   Patentblatt 2004/51**

(51) Int Cl.[7]: **H01M 4/24**, H01M 4/12,
H01M 10/28, H01M 4/32,
H01M 4/42

(21) Anmeldenummer: 01984903.3

(22) Anmeldetag: **05.10.2001**

(86) Internationale Anmeldenummer:
**PCT/IB2001/002802**

(87) Internationale Veröffentlichungsnummer:
**WO 2002/035617 (02.05.2002 Gazette 2002/18)**

(54) **WIEDERAUFLADBARE ZINK-NICKEL BATTERIE**

RECHARGEABLE BATTERY

BATTERIE RECHARGEABLE

(84) Benannte Vertragsstaaten:
**AT BE CH CY DE DK ES FI FR GB GR IE IT LI LU MC NL PT SE TR**

(30) Priorität: **06.10.2000   DE 10050018**

(43) Veröffentlichungstag der Anmeldung:
**02.07.2003   Patentblatt 2003/27**

(73) Patentinhaber: **PK Bauelemente
6340 Baar (CH)**

(72) Erfinder:
- **TOVSTJUK, Kornei, Denisovich
  Lviv (UA)**
- **MICOV, Miro
  Bratislava (SK)**
- **KOCHETOV, Georgi, Petrovich
  Lviv (UA)**
- **KRYESHKO, Vladimir, Uljanovich
  Lviv (UA)**

(74) Vertreter: **Schuster, Gregor, Dipl.-Ing.
Patentanwaltskanzlei Schuster,
Wiederholdstrasse 10
70174 Stuttgart (DE)**

(56) Entgegenhaltungen:
WO-A-84/00642          US-A- 3 951 687

- PATENT ABSTRACTS OF JAPAN vol. 018, no. 414 (E-1587), 3. August 1994 (1994-08-03) & JP 06 124706 A (YUASA CORP), 6. Mai 1994 (1994-05-06)

EP 1 323 197 B1

**Beschreibung**

Stand der Technik:

Die Erfindung geht aus von einer wiederaufladbaren Batterie nach der Gattung des Hauptanspruches.

Eine derartige Batterie ist aus dem Fachbuch "Elektrochemie", WILEY-VCH-Verlag, S. 499 ff., veröffentlicht 1998, bekannt. Hierbei wird eine aus reinem Zink bestehende Zinkschicht verwendet, das sich beim Entladen der Batterie soweit wie möglich in Zink-Hydroxyd ($Zn(OH)_2$) umwandeln soll. Maßnahmen, um dabei die Bildung von Zink-Oxyden und Zinkaten zu verhindern, welche Verbindungen sich beim Laden der Batterie nur sehr schwer zu reinem Zink reduzieren lassen und somit die Lebensdauer der Batterie verkürzen, werden bei der bekannten Batterie nicht getroffen.

Zudem wird im oben erwähnten Stand der Technik vorgeschlagen, die Aktivkohleschicht mit einer porösen Schicht aus einem Material zu überziehen, welches für die Sauerstoffentwicklung eine kleinere Aktivierungsüberspannung aufweist, als die Aktivkohleschicht, damit sich beim Ladevorgang in den Poren und an der elektrolytseitigen Oberfläche der Aktivkohleschicht kein Sauerstoff entwickelt, der die für die Sauerstoffreduktion aktiven Zentren der Aktivkohle schädigt. Als Material wird hierfür Nickel vorgeschlagen. In der gleichen Literaturstelle ist aber außerdem erwähnt, dass hierbei die an die Nickelschicht angelegte Ladespannung nicht zu hoch gewählt werden darf, um die Sauerstoffentwicklung in der Aktivkohleschicht sicher auszuschließen. In Versuchen wurde festgestellt, dass bereits einige Zehntel Ladeüberspannung dann eine Schädigung der Aktivkohleschicht verursachen, wenn die Nickelschicht in direktem elektrischem Kontakt zur Aktivkohleschicht steht.

Die Erfindung und ihre Vorteile:

Die erfindungsgemäße Batterie mit den kennzeichnenden Merkmalen des Hauptanspruches hat demgegenüber die Vorteile, die Zahl der möglichen Lade-Entlade-Zyklen durch eine Verhinderung der Zinkoxyd- und Zinkat-Bildung in der Zinkschicht zu vergrößern, eine Sauerstoffentwicklung in der Aktivkohle und damit deren Schädigung zu verhindern und dadurch die Lebensdauer der erfindungsgemäßen Batterie zu verlängern.

Nach vorteilhaften Ausgestaltungen der Erfindung ist der Zinkschicht das Antimon in Form einer Zink-Antimon-Legierung oder einer Cadmium-Antimon-Legierung beigemischt ist. Bei der Herstellung der Zinkschicht wird dadurch die Verwendung von reinem Antimon vermieden, das eine Toxizität ähnlich der von Arsen aufweist.

Nach weiteren vorteilhaften Ausgestaltungen der Erfindung enthält die Zinkschicht 3% bis 5% Zink-Antimon bzw. 5% Cadmium-Antimon. Diese Mischungsverhältnisse haben sich als besonders wirkungsvoll bei der Vermeidung von Zinkoxyden und Zinkaten in der Zinkschicht erwiesen.

Nach einer weiteren vorteilhaften Ausgestaltung der Erfindung ist die Batterie in einem aus Kunststoff bestehenden Gehäuse angeordnet, das nahe jeder der mindestens einen Aktivkohleschicht eine Öffnung aufweist, die jeweils von einer Metallplatte abgeschlossen ist, in der Löcher eingearbeitet sind und die in elektrischem Kontakt zu der jeweiligen Aktivkohleschicht stehend als deren Elektrode ausgebildet ist. Hierdurch ergibt sich ein strapazierfähiges Batteriegehäuse, das auch größeren mechanischen Belastungen standhält. Durch die Löcher kann zudem sehr leicht Luftsauerstoff an die Aktivkohle gelangen.

Nach einer weiteren vorteilhaften Ausgestaltung der Erfindung besteht die mindestens eine Nickelschicht jeweils aus einem Nickelnetz, auf dem eine Nickelhydroxyd-Pulverschicht aufgebracht ist und das als Elektrode der Nickelschicht ausgebildet ist. Hierdurch werden die beim Laden und Entladen der Batterie in der Nickelschicht stattfindenden Umwandlungsprozesse, $Ni(OH)_2 <=> NiOOH$, beschleunigt und die elektrischen Eigenschaften der erfindungsgemäßen Batterie verbessert.

Nach einer weiteren vorteilhaften Ausgestaltung der Erfindung ist in der Zinkschicht ein Kupfer-Antimon-Netz angeordnet, das als Elektrode der Zinkschicht ausgebildet ist. Aus der erfindungsgemäßen Legierung hergestellte Elektroden weisen eine sehr gute Leitfähigkeit auf.

Nach einer weiteren vorteilhaften Ausgestaltung der Erfindung ist zwischen der mindestens einen Aktivkohleschicht und der jeweils zugeordneten Nickelschicht eine in Richtung der Nickelschicht gepolte Diode geschaltet. Hierdurch wird ermöglicht, dass beim Entladen der Batterie Strom gleichzeitig der Nickelschicht und der Aktivkohleschicht entnommen werden kann, während dadurch verhindert wird, dass beim Aufladen der Batterie das an der Nickelelektrode anliegende positive Potenzial an die Aktivkohleschicht gelangt, wodurch der für die Aktivkohleschicht schädliche Sauerstoff gebildet würde.

Nach weiteren vorteilhaften Ausgestaltungen der Erfindung ist der mindestens einen Aktivkohleschicht Kobald-Oxyd oder Silber beigemischt. Hierdurch wird die Leitfähigkeit der Aktivkohle vergrößert und das Betriebsverhalten der erfindungsgemäßen Batterie verbessert.

Weitere Vorteile und vorteilhafte Ausgestaltungen der Erfindung sind der nachfolgenden Beschreibung, den Zeichnungen und den Ansprüchen entnehmbar.

Zeichnungen:

Ein Ausführungsbeispiel der Erfindung ist in den Zeichnungen dargestellt und im Folgenden näher beschrieben. Es zeigen:

Fig. 1     eine Batterie mit positiven aktiven Massen in einfacher Ausführung und

Fig. 2     die Batterie mit den positiven aktiven Massen in zweifacher Ausführung.

Beschreibung der Ausführungsbeispiele:

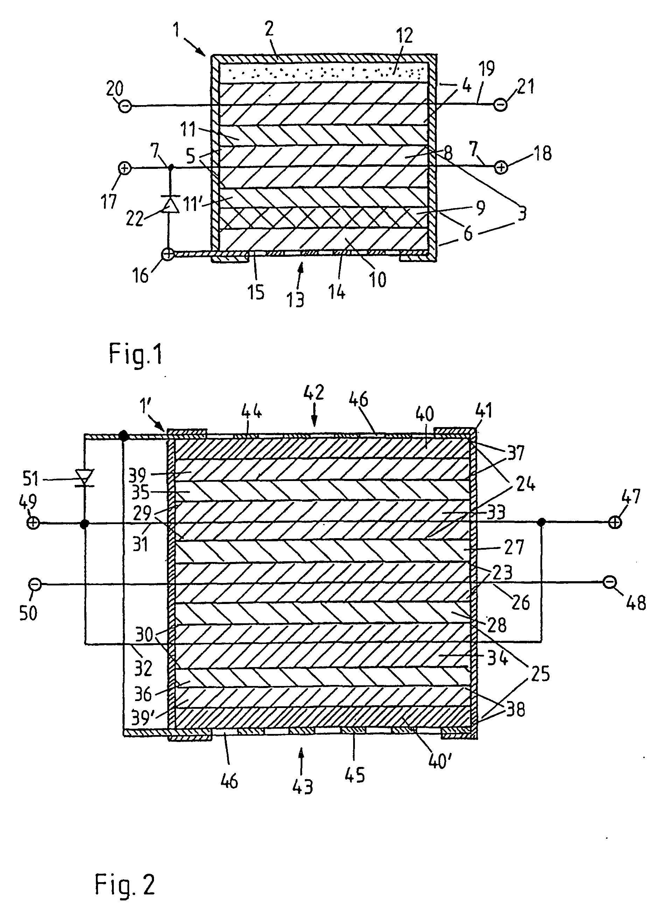

Fig. 1 zeigt eine Batterie 1 im Schnitt, bei der in einem vorzugsweise aus Kunststoff bestehenden Gehäuse 2 positive aktive Massen 3 und eine negative aktive Masse 4 schichtförmig angeordnet sind. Die negative aktive Masse 4 besteht im Wesentlichen aus einer Zinkschicht, dem einige Prozent Zink-Antimon (ZnSb) oder Cadmium-Antimon (CdSb) beigemischt sind, um damit das Aufladen und Entladen der Batterie zu beschleunigen und die Anzahl der möglichen Ladezyklen zu erhöhen. Als vorteilhaft hat es sich hierbei ergeben, dem Zink entweder 3-5% Zink-Antimon oder ca 5% Cadmium-Antimon beizumischen.

Die positiven aktiven Massen 3 bestehen aus einer innenliegenden Nickelschicht 5 und einer außenliegenden Aktivkohleschicht 6. Die Nickelschicht 5 weist ein Nickelnetz 7 auf, das aus dem Gehäuse 2 herausgeführt gleichzeitig als Elektrode dient. Auf das Nickelnetz 7 ist eine Nickelhydroxyd-Pulverschicht 8 aufgebracht, die im entladenen Zustand mit der Formel Ni(OH)$_2$ und im geladenen Zustand mit der Formel NiOOH beschreibbar ist.

Die Aktivkohleschicht 6, der ein geringer Prozentsatz Kobald-Oxyd (Co$_2$O$_3$) oder Silber beigemischt ist, wodurch sich deren elektrische Leitfähigkeit erhöht, besteht aus einer innenliegenden hydrophoben (wasserabweisenden) Schicht 9 und einer außenliegenden hydrophilen (wasseraufnehmenden) Schicht 10. Zwischen der Zinkschicht 4 und der Nickelschicht 5 und zwischen der Nickelschicht 5 und der Aktivkohleschicht 6 befindet sich jeweils eine Schicht eines pastenförmigen Elektrolytes 11 und 11', der im Wesentlichen Kalilauge (KOH) enthält. Oberhalb der Zinkschicht 4 weist das Gehäuse 2 einen Hohlraum 12 auf, der als Vorratsraum für den Elektrolyten dient.

Auf seiner Unterseite, auf der sich auch die Aktivkohleschicht 6 befindet, weist das Gehäuse 2 eine Öffnung 13 auf, die von einer Metallplatte 14 abgeschlossen wird, in der regelmäßig angeordnete Löcher 15 eingearbeitet sind und die in elektrischer Verbindung mit der Aktivkohleschicht 6 steht. Die Metallplatte 14 dient als leitende Elektrode für die Aktivkohleschicht 6 und ist aus dem Gehäuse (hier nach links) ausgeführt, um einen positiven elektrischen Anschluss 16 zur Stromentnahme zu bilden. Beidseitig aus dem Gehäuse 2 ausgeführt ist das als Elektrode für die Nickelschicht 5 dienende Nickelnetz 7, das somit zum einen einen positiven elektrischen Anschluss 17 zur Stromentnahme und zum anderen einen positiven elektrischen Anschluss 18 zum Aufladen der Batterie 1 bildet. Ebenfalls beidseitig aus der Batterie 1 ausgeführt ist ein als Elektrode für die Zinkschicht 4 dienendes Kupfer-Antimon-Netz 19, das demgemäß einerseits einen negativen elektrischen Anschluss 20 zur Stromentnahme und andererseits einen negativen elektrischen Anschluss 21 zum Laden der Batterie 1 bildet.

Folglich dienen der mit der Nickelschicht 5 in Verbindung stehende elektrische Anschluss 18 und der mit der Zinkschicht 4 in Verbindung stehende elektrische Anschluss 21 dem Laden der Batterie 1, und der mit der Aktivkohleschicht 6 in Verbindung stehende Anschluss 16, der mit der Nickelschicht 5 in Verbindung stehende Anschluss 17 und der mit der Zinkschicht 4 in Verbindung stehende Anschluss 20 der Entnahme des in der Batterie 1 gespeicherten Stromes. Beim Ladevorgang ist hierbei dafür Sorge zu tragen, dass sich in der Aktivkohleschicht 6 kein Sauerstoff entwickelt, der die für die Sauerstoffreduktion aktiven Zentren der Aktivkohle schädigt. Zu diesem Zweck ist zwischen der Nickelschicht 5 und der Aktivkohleschicht 6 ein Abstand vorgesehen, der von der als Separator dienenden Schicht 11' des pastenförmigen Elektrolytes gefüllt ist, und sind weiterhin die der Stromentnahme dienenden elektrischen Anschlüsse 16 der Aktivkohleschicht 6 und 17 der Nickelschicht 5 über eine in Richtung des Anschlusses 17 gepolte Diode 22 verbunden. Hierdurch wird bewirkt, dass das an der Elektrode 18 anliegende positive elektrische Ladepotenzial weder direkt von der Nickelschicht 5 an die Aktivkohleschicht 6 angelegt wird, noch über die Elektroden 17 und 16 an die Aktivkohleschicht 6 gelangt, welches positive Ladepotenzial in der Aktivkohleschicht 6 die schädliche Sauerstoffentwicklung bewirken würde. Bei der Stromentnahme aber kann der von der Aktivkohleschicht 6 gelieferte Strom ungehindert über die Diode 22 und den elektrischen Anschluss 17 zusätzlich zu dem von der Nickelschicht 5 gelieferten Strom entnommen werden.

Im Einzelnen laufen beim Laden der Batterie 1 und bei der Stromentnahme die folgenden elektrochemischen Prozesse ab:

In der Nickelschicht 5 wird beim Laden der Batterie 1 gemäß der Beziehung

$$Ni(OH)_2 + 2OH \Rightarrow NiOOH + H_2O + 2e^-$$

so lange NiOOH gebildet, wie Ni(OH)$_2$ vorhanden ist. Ist alles Ni(OH)$_2$ in NiOOH umgewandelt, werden in der NiOOH-Elektrode Sauerstoff und Elektronen, e$^-$, gemäß der Beziehung

$$2OH \Rightarrow 1/2O_2 + H_2O + 2e^-$$

erzeugt. Zur gleichen Zeit wird beim Laden der Batterie 1 in der Zinkschicht 4 das Zn(OH)$_2$ gemäß der

Beziehung

$$Zn(OH)_2 + 2e^- \Rightarrow Zn + 2OH$$

zu reinem Zink reduziert. Durch die oben erwähnten konstruktiven und schaltungstechnischen Maßnahmen wird hierbei der für die Aktivkohleschicht 6 schädliche Oxydations-Prozess

$$2OH \Rightarrow 1/2O_2 + H_2O + 2e^-$$

vermieden.

Bei der Stromentnahme ergibt sich im Zink der folgende Oxydationsprozess:

$$Zn + 2OH \Rightarrow Zn(OH)_2 + 2e^-$$

und laufen parallel in der Nickelschicht 5 der Reduktions-Prozess

$$2NiOOH + 2H_2O + 2e^- \Rightarrow 2Ni(OH)_2 + 2OH$$

und in der Aktivkohleschicht 6 der Reduktions-Prozess

$$1/2O_2 + H_2O + 2e^- \Rightarrow 2OH$$

ab. Hierbei wird Sauerstoff aus der Luft zu Hydroxyd reduziert, der durch die Löcher 15 der Metallplatte 14 an die Aktivkohleschicht 6 gelangt. Die von der Zinkschicht 4 gelieferten und von der Nickelschicht 5 und der Aktivkohleschicht 6 wiederaufgenommenen Elektronen, e⁻, werden dabei über einen elektrischen Verbraucher geleitet.

Dadurch, dass der Zinkschicht 4 3-5% Zink-Antimon (ZnSb) bzw. ca 5% Cadmium-Antimon (CdSb) beigemischt ist, wird erreicht, dass der durch die Beziehung

$$Zn(OH)_2 + 2e^- \Rightarrow Zn + 2OH$$

gekennzeichnete Ladevorgang sehr viel schneller abläuft, als in reinem Zink. Zudem ergeben sich beim Entladen einer herkömmlichen ZnNi- bzw. Zink-Kohle-Batterie nicht nur $Zn(OH)_2$ sondern außerdem diverse Zinkoxyde (ZnO, $ZnO_2$) und Zinkate ($Zn(OH)_3$) , die beim Laden der bekannten Batterien nur sehr schwer zu reinem Zink reduziert werden können. Die Lebensdauer der aus dem Stand der Technik bekannten Zink-Batterien wird dadurch sehr verkürzt. Durch die Antimonbeimischungen im Zink wird beim Entladen der erfindungsgemäßen Batterie 1 die Bildung dieser Zinkoxyde und Zinkate weitgehend verhindert und hierbei fast ausschließlich $Zn(OH)_2$ gebildet. Bilden sich dennoch vereinzelt Zinkoxyde, bzw. Zinkate, so bewirkt das Antimon im Zink, dass beim Aufladen der Batterie 1 diese Zinkoxyde und Zinkate schnell zu reinem Zink reduziert werden. Hierdurch wird die Zahl der möglichen Lade- und Entladezyklen der erfindungsgemäßen Zn-Ni-Kohle-Batterie 1 gegenüber den mit Zinkelektroden versehenen Batterien aus dem Stand der Technik vergrößert.

Eine weitere Ausgestaltung der erfindungsgemäßen Batterie 1' ist in Fig. 2 dargestellt. Sie weist neben einer negativen aktiven Masse 23 beidseitig davon angeordnete positive Massen 24 und 25 auf, welche Massen schichtförmig angeordnet sind. Wie beim Ausführungsbeispiel gemäß Fig. 1 ist die negative aktive Masse 23 als Zinkschicht ausgebildet, die je nach Ladezustand aus reinem Zink oder aus $Zn(OH)_2$ besteht, dem entweder 3-5% ZnSb oder ca 5% CdSb beigemischt ist und in dem ein beidseitig aus der Batterie 1' ausgeführtes und als Elektrode dienendes Kupfer-Antimon-Netz 26 eingebettet ist.

Auf beiden Seiten der negativen aktiven Masse 23 ist je eine pastenförmige KOH-Elektrolytschicht 27 und 28 aufgetragen, an die sich als Teil der positiven aktiven Massen 24 und 25 je eine Nickelschicht 29 und 30 anschließt, die jeweils aus einem beidseitig aus der Batterie 1' ausgeführten und als Elektroden dienenden Nickelnetz 31 und 32 besteht, auf dem je eine Nickelhydroxyd-Pulverschicht 33 und 34 aufgebracht ist, die je nach Ladezustand der Batterie zu einem größeren Teil oder vollständig aus NiOOH oder zu einem größeren Teil oder vollständig aus $Ni(OH)_2$ besteht.

Weitere als Separator dienende pastenförmige KOH-Elektrolytschichten 35 und 36 sind auf den Außenseiten der Nickelschichten 29 und 30 aufgetragen, um auch hier insb. für einen Abstand zwischen den Nickelschichten 29 und 30 und den sich beidseitige daran anschließenden Aktivkohleschichten 37 und 38 zu sorgen, die jeweils aus einer innenliegenden hydrophoben 39, 39' und einer außenliegenden hydrophilen Aktivkohleschicht 40, 40' bestehen.

Die negativen und positiven aktiven Massen 23, 24 und 25 sind in einem Kuststoffgehäuse 41 schichtförmig angeordnet, das beidseitig Öffnungen 42 und 43 aufweist, die jeweils durch eine Metallplatte 44 und 45 mit regelmäßig angeordneten Löchern 46 abgeschlossen sind. Die Metallplatten 44, 45 stehen in elektrischer Verbindung mit den Aktivkohleschichten 37, 38 und sind als deren Elektroden einseitig (hier nach links) aus dem Gehäuse 41 ausgeführt.

Geladen wird die Batterie 1' über einen positiven elektrischen Anschluss 47, der mit den Nickelnetzen 31 und 32 elektrisch verbunden ist, und über einen negativen, mit dem Kupfer-Antimon-Netz 26 der Zinkschicht 23 elektrisch verbundenen Anschluss 48. Entnommen wird der Batterie 1' Strom zum einen an einem positiven Anschluss 49, der mit den Nickelnetzen 31 und 32 und über eine Diode 51 mit den als Elektroden der Aktivkohleschichten 37 und 38 dienenden Metallplatten 44 und 45 verbunden ist. Hierbei ist die Diode 51 so gepolt, dass der Strom nur in Richtung des Anschlusses 49 fließen kann, um zu verhindern, dass beim Aufladen der Batterie 1', wobei die Nickelnetze 31 und 32 auf ein positives Potenzial gelegt werden, Strom den Aktivkohleschichten 37, 38 zufließt, der die Aktivkohleschichten durch eine Sauerstoffentwicklung schädigen könnte. Zum anderen wird der Batterie 1' Strom über einen negativen elektrischen Anschluss 50 entnommen, der mit dem Kupfer-Antimon-Netz 26 der Zinkschicht 23 verbunden ist. Die in den negativen und positiven aktiven Massen 23, 24, 25 ablaufenden elektrochemischen Prozesse sind identisch mit den im Ausführungsbeispiel gemäß Fig. 1 ablaufenden Prozessen.

Bezugszahlenliste

| 1, 1' | Batterie |
|---|---|
| 2 | Gehäuse |
| 3 | positive aktive Masse |
| 4 | negative aktive Masse, Zinkschicht |
| 5 | Nickelschicht |
| 6 | Aktivkohleschicht |
| 7 | Nickelnetz, Elektrode |
| 8 | Nickelhydroxyd-Pulverschicht |
| 9 | hydrophobe Aktivkohleschicht |
| 10 | hydrophile Aktivkohleschicht |
| 11, 11' | Schicht eines pastenförmigen Elektrolytes |
| 12 | Hohlraum |
| 13 | Öffnung |
| 14 | Metallplatte |
| 15 | Löcher |
| 16, 17, 18 | elektrischer Anschluss |
| 19 | Kupfer-Antimon-Netz |
| 20, 21 | elektrischer Anschluss |
| 22 | Diode |
| 23 | negative aktive Masse, Zinkschicht |
| 24, 25 | positive aktive Masse |
| 26 | Kupfer-Antimon-Netz |
| 27, 28 | Elektrolytschicht |
| 29, 30 | Nickelschicht |
| 31, 32 | Nickelnetz |
| 33, 34 | Nickelhydroxyd-Pulverschicht |
| 35, 36 | Elektrolytschicht |
| 37, 38 | Aktivkohleschicht |
| 39, 39' | hydrophobe Aktivkohleschicht |
| 40, 40' | hydrophile Aktivkohleschicht |
| 41 | Gehäuse |
| 42, 43 | Öffnung im Gehäuse |
| 44, 45 | Metallplatte |
| 46 | Löcher |
| 47, 48 | elektrischer Anschluss |
| 49, 50 | elektrischer Anschluss |
| 51 | Diode |

**Patentansprüche**

1. Wiederaufladbare Batterie (1, 1')

 - mit einer Zinkschicht (4, 23),
 - mit mindestens einer über je eine als Separator ausgebildete Elektrolytschicht (11, 27, 28) mit der Zinkschicht (4, 23) verbundenen Nickelschicht (5, 29, 30),
 - mit jeweils einer nahe der mindestens einen Nickelschicht (5, 29, 30) angeordneten Aktivkohleschicht (6, 37, 38),
 - mit einem elektrischen Anschluss (21, 48) zum Laden der Batterie (1, 1'), der mit der Zinkschicht (4, 23) elektrisch verbunden ist,
 - mit einem elektrischen Anschluss (18, 47) zum Laden der Batterie (1, 1'), der mit der mindestens einen Nickelschicht (5, 29, 30) elektrisch verbunden ist,
 - mit einem elektrischen Anschluss (20, 50) zur Entnahme von Batteriestrom, der mit der Zinkschicht (4, 23) elektrisch verbunden ist, und
 - mit einem elektrischen Anschluss (17, 49) zur Entnahme von Batteriestrom, der mit der mindestens einen Aktivkohleschicht (6, 37, 38) elektrisch verbunden ist,

 **dadurch gekennzeichnet,**

 - **dass** der Zinkschicht (4, 23) Antimon beigemischt ist, und
 - **dass** zwischen der mindestens einen Nickelschicht (5, 29, 30) und der jeweils in deren Nähe angeordneten Aktivkohleschicht (6, 37, 38) eine als Separator ausgebildete Elektrolytschicht (11', 35, 36) angeordnet ist.

2. Batterie nach Anspruch 1, **dadurch gekennzeichnet, dass** der Zinkschicht (4, 23) das Antimon in Form einer Zink-Antimon-Legierung beigemischt ist.

3. Batterie nach Anspruch 2, **dadurch gekennzeichnet, dass** die Zinkschicht (4, 23) 3% bis 5% Zink-Antimon enthält.

4. Batterie nach Anspruch 1, **dadurch gekennzeichnet, dass** der Zinkschicht (4, 23) das Antimon in Form einer Cadmium-Antimon-Legierung beigemischt ist.

5. Batterie nach Anspruch 4, dadurch gekennnzeichnet, dass die Zinkschicht (4, 23) 5% Cadmium-Antimon enthält.

6. Batterie nach einem der vorhergehenden Ansprüche, **dadurch gekennzeichnet, dass** die Batterie (1, 1') in einem aus Kunststoff bestehenden Gehäuse (2, 41) angeordnet ist, das nahe jeder der mindestens einen Aktivkohleschicht (6, 37, 38) eine Öffnung (13, 42, 43) aufweist, die jeweils von einer Metallplatte (14, 44, 45) abgeschlossen ist, in der Löcher (15, 46) eingearbeitet sind und die in elektrischem Kontakt zu der jeweiligen Aktivkohleschicht (6, 37, 38) stehend als deren Elektrode ausgebildet ist.

**7.** Batterie nach einem der vorhergehenden Ansprüche, **dadurch gekennzeichnet, dass** die mindestens eine Nickelschicht (5, 29, 30) jeweils aus einem Nickelnetz (7, 31, 32) besteht, auf dem eine Nickelhydroxyd-Pulverschicht (8, 33, 34) aufgebracht ist und das als Elektrode der Nickelschicht (5, 29, 30) ausgebildet ist..

**8.** Batterie nach einem der vorhergehenden Ansprüche, **dadurch gekennzeichnet, dass** in der Zinkschicht (4, 23) ein Kupfer-Antimon-Netz (19, 26) angeordnet ist, das als Elektrode der Zinkschicht (4, 23) ausgebildet ist.

**9.** Batterie nach einem der vorhergehenden Ansprüche, **dadurch gekennzeichnet, dass** zwischen der mindestens einen Aktivkohleschicht (4, 37, 38) und der jeweils zugeordneten Nickelschicht (5, 29, 30) eine in Richtung der Nickelschicht gepolte Diode (22, 51) geschaltet ist.

**10.** Batterie nach einem der vorhergehenden Ansprüche, **dadurch gekennzeichnet, dass** der mindestens einen Aktivkohleschicht (4, 37, 38) Kobald-Oxyd beigemischt ist.

**11.** Batterie nach Anspruch 1 bis 9, **dadurch gekennzeichnet, dass** der mindestens einen Aktivkohleschicht (4, 38, 39) Silber beigemischt ist.

**Claims**

**1.** A rechargeable battery (1, 1') with a zinc layer (4, 23),

- with at least a nickel layer (5, 29, 30) connected to the zinc layer (4, 23) via an electrolyte layer (11, 27, 28) embodied as a separator,
- with in each case an active carbon layer (6, 37, 38) arranged near the at least one nickel layer (5, 29, 30),
- with an electrical connection (21, 48) for charging the battery (1, 1'), which is connected electrically to the zinc layer (4, 23),
- with an electrical connection (18, 47) for charging the battery (1, 1'), which is connected electrically to the at least one nickel layer (5, 29, 30),
- with an electrical connection (20, 50) for drawing off battery current, which is connected electrically to the zinc layer (4, 23), and
- with an electrical connection (17, 49) for drawing off battery current, which is connected electrically to the at least one active carbon layer (6, 37, 38), **characterised in that** antimony is mixed with the zinc layer (4, 23), and **in that** an electrolyte layer (11', 35, 36) embodied as a separator is arranged between the at least one nickel layer (5, 29, 30) and the active carbon layer (6, 37, 38) arranged in each case in its vicinity.

**2.** The battery as claimed in Claim 1, **characterised in that** the antimony is mixed with the zinc layer (4, 23) in the form of a zinc-antimony alloy.

**3.** The battery as claimed in Claim 2, **characterised in that** the zinc layer (4, 23) contains 3 % to 5 % zinc-antimony.

**4.** The battery as claimed in Claim 1, **characterised in that** antimony is mixed with the zinc layer (4, 23) in the form of a cadmium antimony alloy.

**5.** The battery as claimed in Claim 4, **characterised in that** the zinc layer (4, 23) contains 5 % cadmium-antimony.

**6.** The battery as claimed in any one of the preceding claims, **characterised in that** the battery (1, 1') is arranged in a housing (2, 41) comprising plastic, which has an opening (13, 42, 43) near each at least one active carbon layer (6, 37, 38), which in each case is blocked off by a metal plate (14, 44, 45), in which holes (15, 46) are machined and which is in electrical contact with the respective active carbon layer (6, 37, 38) embodied as its electrode.

**7.** The battery as claimed in any one of the preceding claims, **characterised in that** the at least one nickel layer (5, 29, 30) in each case comprises a nickel network (7, 31, 32), to which is applied a nickel hydroxide powder layer (8, 33, 34) and which is embodied as an electrode of the nickel layer (5, 29, 30).

**8.** The battery as claimed in any one of the preceding claims, **characterised in that** a copper antimony network (19, 26) is arranged in the zinc layer (4, 23), embodied as an electrode of the zinc layer (4, 23).

**9.** The battery as claimed in any one of the preceding claims, **characterised in that** a diode (22, 51) poled in the direction of the nickel layer is switched between the at least one active carbon layer (4, 37, 38) and the nickel layer (5, 29, 30) assigned in each case.

**10.** The battery as claimed in any one of the preceding claims, **characterised in that** cobalt oxide is mixed with the at least one active carbon layer (4, 37, 38).

**11.** The battery as claimed in any one of Claims 1 to 9, **characterised in that** silver is mixed with the at least one active carbon layer (4, 38, 39).

**Revendications**

**1.** Batterie rechargeable (1,1')

- comportant une couche de zinc (4,23),
- comportant au moins une couche de nickel (5, 29, 30) reliée à la couche de zinc (4,23) par une couche électrolytique (11, 27, 28) réalisée comme un séparateur sur chacune,
- comportant une couche de charbon actif (6, 37, 38) disposée respectivement à côté d'au moins une des couches de nickel (5, 29, 30),
- comportant une connexion électrique (21,48) pour charger la batterie (1,1'), qui est reliée électriquement avec la couche de zinc (4,23),
- comportant une connexion électrique (18,47) pour charger la batterie (1,1'), qui est reliée électriquement au moins à une des couches de nickel (5, 29, 30),
- comportant une connexion électrique (20,50) pour couper l'alimentation électrique, qui est reliée électriquement à la couche de zinc (4,23),
- comportant une connexion électrique (17,49) pour couper l'alimentation électrique, qui est reliée électriquement à au moins une couche de charbon actif (6, 37, 38),

  **caractérisée en ce que**,

- la couche de zinc (4,23) est mélangée à de l'antimoine et
- entre au moins une couche de nickel (5, 29, 30) et la couche de charbon actif (6,37,38) disposée respectivement à côté de celle-ci, une couche électrolytique (11',35,36) réalisée comme un séparateur est disposée.

**2.** Batterie selon la revendication 1, **caractérisée en ce que** l'antimoine est mélangé à la couche de zinc (4,23) sous la forme d'un alliage zinc-antimoine.

**3.** Batterie selon la revendication 2, **caractérisée en ce que** la couche de zinc (4,23) contient 3% à 5% de l'alliage zinc-antimoine.

**4.** Batterie selon la revendication 1, **caractérisée en ce que** l'antimoine est mélangé à la couche de zinc (4,23) sous la forme d'un alliage cadmium-antimoine.

**5.** Batterie selon la revendication 4, **caractérisée en ce que** la couche de zinc (4,23) contient 5% de l'alliage cadmium-antimoine.

**6.** Batterie selon une des revendications précédentes, **caractérisée en ce que** la batterie (1,1') est disposée dans un boîtier (2,41) constitué de plastique, lequel présente à côté de chacune d'au moins une couche de charbon actif (6,37,38) une ouverture (13,42,43), qui est respectivement obturée par une plaque de métal (14,44,45), dans laquelle des trous (15,46) sont façonnés et qui est configurée en contact électrique avec les couches de charbon actif (6,37,38) respectives comme électrode de ces dernières.

**7.** Batterie selon une des revendications précédentes, **caractérisée en ce que** au moins une des couches de nickel (5, 29, 30) est constituée respectivement d'un filet de nickel (7, 31, 32), sur lequel une couche de poudre d'hydroxyde de nickel (8, 33, 34) est déposée et qui est configuré comme une électrode de la couche de nickel (5, 29, 30).

**8.** Batterie selon une des revendications précédentes, **caractérisée en ce que** un filet cuivre-antimoine (19,26) est disposé dans la couche de zinc (4,23), lequel est configuré comme une électrode de la couche de zinc (4,23).

**9.** Batterie selon une des revendications précédentes, **caractérisée en ce que** entre au moins une des couches de charbon actif (4, 37, 38) et la couche de nickel (5, 29, 30) respectivement associée, une diode (22,51) polarisée dans la direction de la couche de nickel est branchée.

**10.** Batterie selon une des revendications précédentes, **caractérisée en ce que** de l'oxyde de cobalt est mélangé à au moins une des couches de charbon actif (4, 37, 38).

**11.** Batterie selon la revendication 1 à 9, **caractérisée en ce que** de l'argent est mélangé à au moins une des couches de charbon actif (4, 37, 38).

Fig.1

Fig. 2